(19) **Europäisches Patentamt / European Patent Office / Office européen des brevets**

(11) **EP 4 022 259 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **20754189.7**

(22) Anmeldetag: **03.08.2020**

(51) Internationale Patentklassifikation (IPC):
**G01F 1/58** (2006.01)        **G01F 1/60** (2006.01)
**G01F 23/24** (2006.01)        **G01N 11/00** (2006.01)

(52) Gemeinsame Patentklassifikation (CPC):
**G01F 1/60; G01F 1/584; G01N 11/00;**
G01N 2011/0086

(86) Internationale Anmeldenummer:
**PCT/EP2020/071816**

(87) Internationale Veröffentlichungsnummer:
**WO 2021/037491 (04.03.2021 Gazette 2021/09)**

(54) **MAGNETISCH-INDUKTIVE DURCHFLUSSMESSSONDE UND VERFAHREN ZUM BETREIBEN EINER MAGNETISCH-INDUKTIVEN DURCHFLUSSMESSSONDE**

MAGNETIC-INDUCTIVE FLOW METER AND METHOD FOR OPERATING A MAGNETIC-INDUCTIVE FLOW METER

DÉBITMÈTRE À INDUCTION MAGNÉTIQUE ET PROCÉDÉ DE FONCTIONNEMENT D'UN DÉBITMÈTRE À INDUCTION MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2019   DE 102019123359**

(43) Veröffentlichungstag der Anmeldung:
**06.07.2022   Patentblatt 2022/27**

(73) Patentinhaber: **Endress + Hauser Flowtec AG
4153 Reinach (CH)**

(72) Erfinder:
• **TSCHUDIN, Beat
  4153 Reinach (CH)**
• **MARIAGER, Simon
  4059 Basel (CH)**

(74) Vertreter: **Hahn, Christian
Endress+Hauser Group Services
(Deutschland)AG +Co. KG
Colmarer Straße 6
79576 Weil am Rhein (DE)**

(56) Entgegenhaltungen:
DE-A1-102007 063 372        JP-A- S6 175 217
US-A- 6 094 992              US-A1- 2016 238 422

• TRAECHTLER A ET AL: "TOMOGRAPHISCHE METHODEN BEI DER INDUKTIVEN DURCHFLUSSMESSUNG ZUR BESTIMMUNG VON STROEMUNGSPROFILEN UND -PARAMETERN", TM - TECHNISCHES MESSEN/PLATTFORM FÜR METHODEN, SYSTEME UND ANWENDUNGEN DER MESSTECHNIK, R.OLDENBOURG VERLAG. MUNCHEN, DE, Bd. 64, Nr. 10, 1. Oktober 1997 (1997-10-01), Seiten 365-373, XP000750766, ISSN: 0171-8096
• ANSGAR TRÄCHTLER ET AL: "In-Line Monitoring of Rheological Parameters with an Electromagnetic Flowmeter", PARTICLE AND PARTICLE SYSTEMS CHARACTERIZATION., Bd. 15, Nr. 1, 1. Februar 1998 (1998-02-01), Seiten 30-35, XP055729760, DE ISSN: 0934-0866, DOI: 10.1002/(SICI)1521-4117(199802)15:1<30::AID-PPSC30>3.0.CO;2-X

EP 4 022 259 B1

**Beschreibung**

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss $\dot{V}$ ermittelt werden.

Im Gegensatz zu einem magnetisch-induktiven Durchflussmessgerät werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die erwähnte Spulenanordnung auf der Mantelfläche des Messrohrs entfällt, da das Magnetfeld lediglich im Bereich des in das Fluid ragenden Frontendes der Durchflussmesssonde existiert bzw. von einem deren Spulenanordnung durchfließenden Strom in diesem Bereich erzeugt wird. Dafür wird üblicherweise das Magnetsystem im Inneren des Gehäuses und in unmittelbarer Nähe zu den Messelektroden angeordnet, so dass eine Symmetrieachse der erzeugten Magnetfeldlinien die Fläche zwischen den Messelektroden senkrecht schneidet. Die Messelektroden sind entweder an der Frontfläche oder an den Seitenflächen des Gehäuses angeordnet.

Für beide Messsystem setzt sich die an den Messelektroden anliegende Messspannung *U* aus der vereinfachten Gleichung

$$U = f(Re) \cdot u \cdot S$$

zusammen, wobei *S* eine von der Sensorgeometrie und dem Magnetfeld abhängige, nominelle Signalstärke und *f(Re)* ein Strömungsprofil- bzw. Reynolds-Zahl-abhängiger Korrekturfaktor ist. Üblicherweise nimmt man den Korrekturfaktor *f(Re)* als konstant an.

Dies ist aber nicht immer gegeben. Die nominelle Signalstärke *S* wird bei der Justierung der Durchflussmesssonde bestimmt und deren Wert ist in einem Speicher der Auswerteschaltung hinterlegt.

Die Reynolds-Zahl eines fließenden Mediums in einer Rohrleitung ist definiert durch

$$Re = \rho \cdot u \cdot \frac{DN}{\mu} = u \cdot \frac{DN}{\nu},$$

mit dem Durchmesser *DN* der Rohrleitung, der Dichte des Mediums $\rho$, der dynamischen Viskosität $\mu$ und der kinematischen Viskosität *v* des Mediums.

Magnetisch-induktive Durchflussmesssonden sind besonders empfindlich gegenüber der vorliegenden Reynolds-Zahl des Mediums in der Rohrleitung, da diese das Strömungsprofil des fließenden Mediums bestimmt. Abhängig vom Rohrsystem, Magnetsystem und Einbautiefe kann der Korrekturfaktor *f(Re)* variieren und um mehrere Prozent vom angenommenen, konstanten Wert abweichen. Üblicherweise wird die Anordnung der Messelektroden und der magnetfelderzeugenden Vorrichtung dahingehend optimiert, dass die Kennlinie der Durchflussmesssonde möglichst linear ist, d.h. die induzierte Messspannung über eine möglichst großen Reynolds-Zahlenbereich bzw. für den für die spezifische Anwendung interessanten Reynolds-Zahlenbereich und eine vorgegebene Einbautiefe Reynolds-Zahl-unabhängig ist. Somit sind Durchflussmesssonden, welche in Übergangsströmungsbereichen eine Abweichung von einzelnen Prozenten aufweisen, und Durchflussmesssonden, welche Abweichungen von ca. 2 bis 5% für Strömungen mit einem turbulenten Strömungsprofil aufweisen bereits Industriestandard.

Die EP 0 892 251 A1 offenbart eine magnetisch-induktive Durchflussmesssonde, deren in das Fluid ragende Frontende die Form einer Kugelkalotte annimmt, und in der eine erste und zweite Elektrode zum Bilden eines galvanischen Kontaktes auf einem der Meridiane der Kugelkalotte symmetrisch zu einem Scheitelpunkt des Meridians angeordnet sind. Durch die Kugelkalottenform verringert sich die Bildung von Strömungswirbeln, die entstehen, wenn der Frontbereich der Durchflussmesssonden vom Medium angeströmt wird, und die Messgenauigkeit bei geringen Strömungsgeschwindigkeiten nimmt zu.

Trächtler, Ansgar et al. offenbart in "Tomographische Methoden bei der induktiven Durchflussmessung zur Bestimmung von Strömungsprofilen und -parametern", Technisches Messen/Plattform für Methoden, Systeme und Anwendungen der Messtechnik, R.Oldenbourg Verlag, München, DE, Bd. 64, Nr. 10, 1 Oktober 1997, S. 365-373 ein herkömmliches magnetisch-induktives Durchflussmessgerät mit zwei Messelektroden, welches mittels einem angepassten Spulensystem - welches derart ausgebildet ist, unterschiedliche Magnetfeldprofile zu erzeugen - die rheologischen Eigenschaften eines Nicht-newtonischen Fluids bestimmt.

Der Erfindung liegt die Aufgabe zugrunde eine Alternative bereitzustellen.

Die Aufgabe wird gelöst durch die magnetisch-induktive Durchflussmesssonde nach Anspruch 1, durch das Verfahren zum Betreiben der magnetisch-induktiven Durchflussmesssonde nach Anspruch 11 und durch die Durchflussmessstelle nach Anspruch 13.

Die erfindungsgemäße magnetisch-induktive Durchflussmesssonde, die in ein von einem Medium durchströmtes Rohr einsetzbar ist, umfasst:

- ein Gehäuse,

  wobei das Gehäuse eine Gehäusewandung aufweist;

  - mindestens eine erste und eine zweite Messelektrode, die an der Gehäusewandung angeordnet sind, zum Bilden jeweils eines galvanischen Kontaktes mit einem fließenden Medium;

  - mindestens eine magnetfelderzeugende Vorrichtung zum Erzeugen eines die Gehäusewandung durchsetzenden Magnetfeldes,

  wobei die magnetfelderzeugende Vorrichtung im Gehäuse angeordnet ist; und

  - eine Messschaltung, die dazu eingerichtet ist mindestens eine erste Messgröße zu bestimmen,

  wobei Messwerte der ersten Messgröße zwischen zwei Messelektroden oder an einer Messelektrode in Bezug zu einem Referenzpotential, insbesondere einem Erdpotential gemessen werden,

  - eine Auswerteschaltung, welche dazu eingerichtet ist, eine Reynolds-Zahl und/oder einen kinematischen Viskositätswert des Mediums im Rohr mittels Messwerte der ersten und einer zweiten Messgröße, die sich von der ersten Messgröße unterscheidet, zu ermitteln,

  wobei Messwerte der zweiten Messgröße zwischen zwei Messelektroden oder an einer Messelektrode in Bezug zu einem Referenzpotential, insbesondere einem Erdpotential ermittelt werden,

  wobei sich mindestens eine für die Ermittlung der Messwerte der zweiten Messgröße eingerichtete Messelektrode von den für die Ermittlung der Messwerte der ersten Messgröße eingerichteten Messelektroden unterscheidet,

  wobei die Messelektroden so an der Gehäusewandung angeordnet sind, dass bei einer Testmessung Quotienten Messwerte der ersten und der zweiten Messgröße zumindest in einem Reynolds-Zahlenbereich von $10\,000 \leq Re \leq 100\,000$ mit der Reynolds-Zahl des Mediums im Rohr bijektiv korrespondieren.

Die Anordnung der Messelektroden am Gehäuse der Durchflussmesssonde ist wesentlich für die Bestimmung der Reynolds-Zahl. Damit man anhand der beiden Messgrößen die Reynolds-Zahl ermitteln kann, müssen die Quotienten der Messwerte bzw. muss eine mathematische Funktion, welche den Quotienten der Messwerte der jeweiligen Messgröße in Abhängigkeit der Reynolds-Zahl des Mediums im Rohr beschreibt, bijektiv sein. Dies wird durch die Position der Messelektrode am Gehäuse festgelegt.

Die Position der Messelektroden ist dahingehend optimiert, dass sich der Quotient der ersten und zweiten Messgröße, insbesondere der ersten und zweiten Messspannung $U_1/U_2$ bijektiv zur Reynolds-Zahl des fließenden Mediums im Rohr verhält. Die Optimierung kann experimentell oder mittels eines Simulationsverfahrens erfolgen, beispielsweise mittels Finite-Elemente Simulationen.

Für den Quotienten $U_1/U_2$ ergibt sich unter der Annahme, dass die Durchflussgeschwindigkeit die jeweils induzierte Messspannung einer gemeinsamen Durchflussgeschwindigkeit u entspringt,

$$\frac{U_1}{U_2} = \frac{f_1(Re)}{f_2(Re)} \cdot \frac{S_1}{S_2} = g(Re) \cdot \frac{S_1}{S_2}.$$

Gemäß dem Fall, dass $g(Re)$ invertierbar ist gilt außerdem

$$Re = g^{-1}\left(U_1 \cdot \frac{S_2}{S_1 \cdot U_2}\right),$$

wobei $g^{-1}$ die Umkehrfunktion von $g$ ist. Die Bijektivität des Quotienten kann am einfachsten dadurch realisiert werden, dass die erste und die zweite Messelektrode so am Gehäuse angeordnet werden, dass der erste Korrekturfaktor $f_1(Re)$ über den Reynolds-Zahlenbereich Reynolds-Zahl-unabhängig ist. In diesem Fall muss der zweite Korrekturfaktor $f_2$ bijektiv mit der Reynolds-Zahl korrespondieren. Die Position einer der beiden Messelektrode oder einer dritten Messelektrode wird daher idealerweise so gewählt, dass die Änderung des Korrekturfaktors $f_2(Re)$, welche die Reynolds-Zahl-Abhängigkeit der zweiten Messgröße beschreibt, bzw. die Steigung des Quotienten $U_1/U_2$ für unterschiedliche Reynolds-Zahlen möglichst groß ist.

Es ist jedoch vorteilhaft, wenn mindestens drei Messelektroden für die Bestimmung der Messgrößen zur Verfügung stehen. Die Bijektivität des Quotienten kann dann dadurch realisiert werden, dass die erste und die zweite Messelektrode so am Gehäuse angeordnet werden, dass der erste Korrekturfaktor $f_1(Re)$, der sich hinter der induzierten Messspannung verbirgt über den Reynolds-Zahlenbereich Reynolds-Zahl-unabhängig ist. In diesem Fall muss der zweite Korrekturfaktor $f_2$ bijektiv mit der Reynolds-Zahl korrespondieren. Die Position der dritten Messelektrode wird daher idealerweise so gewählt, dass die Änderung des Korrekturfaktors $f_2(Re)$ bzw. die Steigung des Quotienten für unterschiedliche Reynolds-Zahlen möglichst groß ist. Der Korrekturfaktors $f_2(Re)$ kann demnach durch eine zwischen der ersten und der dritten Messelektrode ermittelte Messspannung, durch eine zwischen der zweiten und der dritten Messelektrode ermittelten Messspannung oder durch das an der dritten Messelektrode ermittelte Potential in Bezug auf das Referenzpotential bestimmt werden.

Die Positionierung der einzelne Messelektroden am Gehäuse ist ausschlaggebend für die Bestimmung der Reynolds-Zahl oder der kinematischen Viskosität. Zur Bestimmung der Reynolds-Zahl werden Messwerte zweier Messgrößen benötigt. Die erste Messgröße wird mit der Messschaltung an einem Messelektrodenpaar ermittelt. Das gleiche gilt vorzugsweise auch für die zweite Messgröße. Die Position der einzelnen Messelektroden kann jedoch nicht beliebig gewählt werden. Es muss gelten, dass der Quotient der Messwerte der ersten und der zweiten Messgröße bijektiv mit der Reynoldszahl des fließenden Mediums im Rohr korrespondiert. Das heißt, dass die Quotienten der Messwerte der ersten und der zweiten Messgröße, gemessen über einen Reynolds-Zahlenbereich, durch eine mathematische Funktion beschrieben werden kann, die bijektiv zur Reynolds-Zahl ist bzw. dass die Menge der Quotienten der Messwerte über einen Reynolds-Zahlenbereich bijektiv zu der verknüpften Menge der Reynolds-Zahlen korrespondiert.

Dies wird beispielsweise dadurch realisiert, dass man das erste Messelektrodenpaar diametral auf eine Frontfläche anordnen, wie es bei konventionellen Durchflussmesssonden üblich ist, und die dritte Messelektrode bzw. die dritte und eine vierte Messelektrode versetzt zum ersten Messelektrodenpaar an der Frontfläche oder an einer Seitenfläche des Gehäuses anordnet.

Somit sind die Messwerte der ersten Messgröße im Wesentlichen Reynolds-Zahl-unabhängig und die Messwerte der zweite Messgröße Reynolds-Zahl-abhängig. Dies ist jedoch nicht die einzige Möglichkeit ein erfindungsgemäßes Durchflussmesssonde zu realisieren. Es ist auch vorstellbar, dass alle Messelektroden so angeordnet werden, dass die an den Messelektroden über den Reynolds-Zahlenbereich bzw. über einen Teil des Reynolds-Zahlenbereich abgegriffenen Messwerte Reynolds-Zahl-abhängig sind. In diesem Fall muss aber der Quotient der Messwerte bijektiv mit der Reynolds-Zahl korrespondieren, damit die Reynolds-Zahl bestimmt werden kann.

Die Auswerteschaltung weist üblicherweise eine Speichereinheit auf, wobei die Speichereinheit einen ersten Datensatz aufweist mit Referenzwerten, die mit der ersten und zweiten Messgröße korrelieren, und insbesondere proportional zum Quotienten der ersten und zweiten Messgröße sind, wobei die Speichereinheit einen zweiten Datensatz aufweist mit Reynolds-Zahlen, wobei der erste und der zweite Datensatz bijektiv korrespondieren, wobei die Auswerteschaltung dazu eingerichtet ist anhand des ersten und zweiten Messgröße die korrespondierende Reynolds-Zahl des Mediums in der Rohrleitung zu ermitteln.

Als Speichereinheit eignet sich nicht flüchtiger Speicher, wie Flash-Speicher oder EPROM. Diese kann in der Auswerteschaltung integriert oder separat bereitgestellt sein. Die Speichereinheit weist vorzugsweise mindestens einen ersten und einen zweiten Datensatz auf. Im ersten Datensatz sind Referenzwerte hinterlegt. Diese stammen von Computer-Simulationen oder von Justiermessungen. Die Referenzwerte können beispielsweise Quotienten der simulierten oder gemessenen Messwerte der ersten Messgröße und der zweiten Messgröße sein. Der zweite Datensatz weist Reynolds-Zahlen auf, die den Quotienten zugeordnet sind. Alternativ können Paare, aus jeweils einer Reynolds-Zahl und einem Referenzwert in der Speichereinheit hinterlegt sein. Alternativ kann in der Speichereinheit auch eine mathematische Funktion hinterlegt sein, die den zwei Messgrößen oder einem Term, der von den zwei Messgrößen abhängt Reynolds-Zahlen zuordnet.

Es ist besonders vorteilhaft, wenn die magnetisch-induktive Durchflussmesssonde eine Auswerteschaltung aufweist, die dazu eingerichtet ist, die Reynolds-Zahl und/oder die von der Reynolds-Zahl abhängigen kinematischen Viskosität des Mediums in der Rohrleitung mittels Messwerten zweier an mindestens zwei Messelektroden abgegriffenen Messgrößen zu ermitteln. Dabei unterscheidet sich die erste Messgröße von der zweiten Messgröße. Die beiden Messgrößen unterscheiden sich dadurch, dass sie zwischen unterschiedlichen Messelektrodenpaaren ermittelt oder an unterschiedlichen Messelektroden gemessen werden.

Messschaltungen im Bereich der Durchflussmesstechnik sind hinlänglich bekannt. Die Aufgabe der Messschaltung ist es sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben.

Zum einen kann die Messschaltung dazu eingerichtet sein, ein Potential an einer der Messelektrode in Bezug auf ein Referenzpotential abzugreifen. Somit kann selbst dann, wenn eine der zwei Messelektroden ausfällt, weiterhin die Durchflussgeschwindigkeit anhand eines ermittelten Potentials bestimmt werden. Als Referenzpotential eignet sich das Gehäusepotential oder ein Erdpotential. Die magnetisch-induktive Durchflussmesssonde kann eine Erdungselektrode aufweisen, die mit dem Referenzpotential verbunden ist. Die beiden Messgrößen können demnach die an zwei Messelektroden jeweils vorherrschenden und ermittelten elektrischen Potentiale sein.

Zum anderen kann die Messschaltung so ausgebildet sein, dass sie eine zwischen zwei Messelektroden vorherrschende Potentialdifferenz detektiert und aufnimmt.

Alternativ kann die Messschaltung dazu eingerichtet sein, die Messspannung zwischen der ersten und der zweiten Messelektrode und zusätzlich dazu, das Potential an einer der beiden oder einer dritten Messelektroden in Bezug auf das Referenzpotential zu messen.

Eine Messschaltung umfasst daher einen Analog/Digital-Wandler, der die eingehende Signale, in dem Fall die aktuell an dem jeweiligen Messelektrodenpaar anliegende Potentialdifferenz oder das an der jeweiligen Messelektrode vorherrschende elektrische Potential, in digitale Daten umwandelt, die dann durch eine Auswerteschaltung weiterverarbeitet oder gespeichert werden. Es sind aber auch andere Messumsetzer oder Messumformer der Digitalen Messtechnik bekannt und geeignet zum Detektieren einer Messspannung oder eines elektrischen Potentials.

Die Auswerteschaltung ist dazu eingerichtet, die durch die Messschaltung gemessenen Messwerte der jeweiligen Messgrößen zu verarbeiten und die gesuchte Messgröße ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse der Durchflussmesssonde angeordnet ist.

Das erfindungsgemäße Verfahren zum Betreiben einer magnetisch-induktiven Durchflussmesssonde, insbesondere des erfindungsgemäßen magnetisch-induktiven Durchflussmesssonde,

wobei die Durchflusssonde ein Gehäuse mit einer Gehäusewandung aufweist,

wobei eine magnetfelderzeugende Vorrichtung zum Erzeugen eines die Gehäusewandung durchsetzenden Magnetfeldes im Gehäuse angeordnet ist,

wobei Messelektroden an der Gehäusewandung angeordnet sind;

umfasst die Verfahrensschritte:

- Erfassen eines Messwertes einer ersten Messgröße und eines Messwertes einer zweiten Messgröße, die sich von der ersten Messgröße unterscheidet, wobei die Messwerte der jeweiligen Messgrößen zwischen zwei Messelektroden oder an einer Messelektrode in Bezug auf ein Referenzpotential, insbesondere ein Erdpotential bestimmt werden;

- Bilden eines Referenzwertes aus den Messwerten der ersten und der zweiten Messgröße, wobei der Referenzwert proportional zum Quotienten der Messwerte der ersten und der zweiten Messgröße ist; und

- Ermitteln einer Reynolds-Zahl in Abhängigkeit des Referenzwertes.

Es ist besonders vorteilhaft, wenn die Reynolds-Zahl bestimmt und an den Benutzer ausgegeben wird. Dadurch lässt sich unkompliziert überprüfen, ob die vom Hersteller angegebene Messgenauigkeit noch gilt, oder ob die vorliegende Reynolds-Zahl außerhalb des Anwendungsbereiches liegt.

Die Messwerte einer einzelnen Messgröße reichen nicht aus um die Reynolds-Zahl des Mediums in der Rohrleitung zu bestimmen, weil die zwei Unbekannten, nämlich die Reynolds-Zahl und der Durchfluss des Mediums, nicht durch eine einzelne Messgröße bestimmt werden kann. Deshalb ist das gesamte Messsystem üblicherweise so eingerichtet, dass die induzierte Messspannung über einen möglichst großen Reynolds-Zahlenbereich Reynolds-Zahl-unabhängig ist. Dadurch geht die Information der vorliegenden Reynolds-Zahl verloren. Es ist daher besonders vorteilhaft, wenn die Durchflussmesssonde dazu eingerichtet ist, zusätzlich zur ersten Messgröße zur Bestimmung eines Durchflussmesswertes eine zweite Messgröße, welche Reynolds-Zahl abhängig ist, zu bestimmen und unter Berücksichtigung beider Messgrößen die Reynolds-Zahl zu ermitteln. In dem Fall muss das Messsystem nicht so angepasst werden, dass die gemessenen Messspannungen möglichst Reynolds-Zahl-unabhängig sind, was die Gestaltung des Magnet- und Messsystems erheblich einschränkt.

Die erfindungsgemäße Durchflussmessstelle, umfasst

- eine Rohrleitung mit einem Durchmesser $DN$ und einer Öffnung, und

- eine erfindungsgemäße magnetisch-induktive Durchflussmesssonde;

wobei die magnetisch-induktive Durchflussmesssonde in der Öffnung angeordnet ist und eine Einbautiefe D aufweist, welche insbesondere die Ungleichung $0,05 \leq DIDN \leq 0,4$ und bevorzugt $0,1 \leq DIDN \leq 0,2$ erfüllt.

Vorteilhafte Ausgestaltungen der Erfindung sind Gegenstand der Unteransprüche.

Eine Ausgestaltung sieht vor, dass die Messelektroden so an der Gehäusewandung angeordnet sind, dass bei einer Testmessung Quotienten Messwerte der ersten und der zweiten Messgröße zumindest in einem Reynolds-Zahlenbereich von $5\,000 \leq Re \leq 500\,000$ und bevorzugt $1\,000 \leq Re \leq 1\,000\,000$ mit der Reynolds-Zahl des Mediums im Rohr bijektiv korrespondieren.

Eine Ausgestaltung sieht vor, dass die Messchaltung dazu eingerichtet ist, die Messwerte der ersten Messgröße zwischen der ersten und der zweiten Messelektrode zu bestimmen,

wobei die Messschaltung dazu eingerichtet ist, Messwerte der zweiten Messgröße zwischen einer ersten und einer dritten Messelektrode oder zwischen einer zweiten und der dritten Messelektrode zu ermitteln.

Die Messschaltung ist vorzugsweise dermaßen ausgebildet, dass sie eine erste Potentialdifferenz $U_1$ zwischen einem ersten Messelektrodenpaar und eine zweite Potentialdifferenz $U_2$ zwischen einem zweiten Messelektrodenpaar ermittelt. Die Bestimmung der Messspannung erfolgt entweder durch das direkte Messen der Potentialdifferenz zwischen den beiden Messelektroden oder durch das Messen des jeweils an den Messelektroden vorherrschenden, elektrischen Potentials in Bezug auf ein Referenzpotential und dem Bilden einer Differenz. Dabei gilt $U_1 = f_1(Re) \cdot S_1 \cdot u$ und $U_2 = f_2(Re) \cdot S_2 \cdot u$, wobei $f_1(Re)$ und $f_2(Re)$ jeweils einen Reynolds-Zahl-abhängigen Korrekturfaktor beschreiben. Die ermittelten Messwerte werden an eine Auswerteschaltung weitergeleitet, die eine Speichereinheit umfasst, in der Referenzwerte und Reynolds-Zahlen hinterlegt sind bzw. in der eine mathematische Funktion, welche Reynolds-Zahlen Referenzwerten zuordnet hinterlegt ist.

Es ist vorteilhaft, wenn die Durchflussmesssonde genau drei Messelektroden aufweist. Dadurch reduziert sich die Anzahl an potentiellen Leckage-Stellen auf drei. Diese Ausgestaltung lässt sich am einfachsten dadurch realisieren, dass eine herkömmliche magnetisch-induktive Durchflussmesssonde mit zwei Messelektroden um eine weitere Messelektrode erweitert wird. Diese kann an einer Seitenfläche des Gehäuses angeordnet sein oder an der Frontfläche, versetzt zur ersten und zweiten Messelektrode.

Es ist besonders vorteilhaft, wenn die drei Messelektroden auf einer, auf der Stirnfläche des Gehäuses verlaufenden Gerade, insbesondere eines Durchmessers der Frontfläche angeordnet sind. Beim Einhalten der vorgegebenen Einbaulage, liegt bei dieser Ausgestaltung an den jeweiligen Messelektrodenpaaren eine deutlich größeres Messsignal vor, als sonst.

Spielt die Messsignalstärke jedoch nur eine untergeordnete Rolle, so ergibt sich durch das Versetzen der dritten Messelektrode bezüglich des die erste und zweite Messelektrode schneidenden Gerade ein weiterer Freiheitsgrad für die Optimierung der Reynolds-Zahl abhängigen bzw- für der zweiten Messgröße.

Eine Ausgestaltung sieht vor, dass die Messschaltung dazu eingerichtet ist die Messwerte der ersten Messgröße zwischen der ersten und der zweiten Messelektrode zu bestimmen,

wobei die Messschaltung dazu eingerichtet ist Messwerte der zweiten Messgröße zwischen einer dritten und einer vierten Messelektrode zu ermitteln.

Die Messschaltung ist vorzugsweise dermaßen ausgebildet, dass sie eine erste Potentialdifferenz $U_1$ zwischen einem ersten Messelektrodenpaar und eine zweite Potentialdifferenz $U_2$ zwischen einem zweiten Messelektrodenpaar ermittelt. Die Bestimmung der Messspannung erfolgt entweder durch das direkte Messen der Potentialdifferenz zwischen den beiden Messelektroden oder durch das Messen des jeweils an den Messelektroden vorherrschenden, elektrischen Potentials in Bezug auf ein Referenzpotential und dem Bilden einer Differenz. Dabei gilt $U_1 = f_1(Re) \cdot S_1 \cdot u$ und $U_2 = f_2(Re) \cdot S_2 \cdot u$, wobei $f_1(Re)$ und $f_2(Re)$ jeweils einen Reynolds-Zahl-abhängigen Korrekturfaktor beschreiben. Die ermittelten Messwerte werden an eine Auswerteschaltung weitergeleitet, die eine Speichereinheit umfasst, in der Referenzwerte und Reynolds-Zahlen hinterlegt sind bzw. in der eine mathematische Funktion, welche Reynolds-Zahlen Referenzwerten zuordnet hinterlegt ist.

Um Common-Mode Störungen zu vermeiden und somit das Rauschen im Signal zu minimieren, ist es vorteilhaft, wenn es sich bei den beiden Messgrößen nicht um Potentiale im Bezug zu einem Referenzpotential handelt, sondern um Potentialdifferenzen, die gemessen werden.

Bei herkömmlichen magnetisch-induktiven Durchflussmesssonden wird das Magnetsystem und die Position der Messelektroden dahingehend optimiert, dass das jeweils an den Messelektroden vorherrschende elektrische Potential linear mit der Durchflussgeschwindigkeit korreliert. Fügt man nun eine dritte Messelektrode hinzu und misst die Potentialdifferenz zwischen der dritten und einer der beiden Messelektroden, so geht immer der Einfluss des linearisierten Messsystems mit in die zweite Messgröße ein. Diese sollte jedoch über einen möglichst großen Reynolds-Zahlenbereich Reynolds-Zahl-abhängig sein.

Es ist daher besonders vorteilhaft, wenn die Messwerte der zweiten Messgröße an der dritten und einer vierten Messelektrode abgegriffen werden, die versetzt zum ersten Messelektrodenpaar angeordnet sind. Dadurch ist auch die am zweiten Messelektrodenpaar anliegende Potentialdifferenz von den beiden Potentialen der ersten Messgröße entkoppelt.

Es ist besonders vorteilhaft, wenn das erste Messelektrodenpaar diametral bzw. auf der Frontfläche des Gehäuses angeordnet ist.

Eine Ausgestaltung sieht vor, dass das Gehäuse zumindest abschnittsweise zylindrisch geformt ist und eine Mantelfläche aufweist,

wobei die dritte Messelektrode an der Mantelfläche angeordnet ist und einen galvanischen Kontakt mit dem Medium bildet.

Dabei kann die dritte Messelektrode durch eine einzelne Stiftelektrode gebildet sein, oder sich über die gesamte Mantelfläche des Gehäuses erstrecken bzw. durch den leitfähigen Mantelkörper des Gehäuses gebildet sein. Durch die Anbringung der dritten Messelektroden an die Mantelfläche eröffnen sich weitere Optimierungsmöglichkeiten für die jeweiligen Reynolds-Zahl abhängigen Messgrößen, so dass der Bereich, in dem der Quotient der beiden Messgrößen bijektiv mit der Reynolds-Zahl korrespondiert, erweitert werden kann.

Des Weiteren lassen sich durch diese spezielle Anordnung besonders schmale Durchflussmesssonden realisieren.

Eine Ausgestaltung sieht vor, dass die erste, zweite und eine dritte Messelektrode an einer Stirnfläche des Gehäuses angeordnet sind.

Dies ist besonders dann vorteilhaft, da ein umständliches Abdichten der Messelektroden an der Mantelfläche des überwiegend zylinderförmigen Gehäuses vermieden wird. Des Weiteren ist der Herstellungsaufwand dieser speziellen Durchflussmesssonde erheblich geringer. Für Anwendungen in Rohre mit geringem Durchmesser ist die Einbautiefe so gering, dass nur ein minimaler Anteil der Mantelfläche das Medium berührt.

Eine Ausgestaltung sieht vor, dass die erste und die zweite Messelektrode auf einem auf der Stirnfläche verlaufenden und koaxial zum Gehäuse angeordneten Kreisumfang liegen,

wobei der Kreisumfang einen Bereich umschließt, in dem die dritte Messelektrode angeordnet ist oder bevorzugt die dritte und die vierte Messelektrode angeordnet sind.

Es ist besonders vorteilhaft, wenn die drei Messelektroden an der Stirnfläche angeordnet sind. Simulationen konnten zeigen, dass es für ein herkömmliches Magnetsystem aus Spulenkern, Spule und Rückführkörper, bei dem sich der Spulenkern unmittelbar bis zum Frontende erstreckt, vorteilhaft ist, wenn zusätzlich zu den beiden herkömmlichen Messelektroden eine oder zwei weitere Messelektroden am Frontende, insbesondere auf der durch die zwei Messelektroden definierten Kreisfläche, angebracht werden.

Dabei gilt für die Positionierung der ersten und zweiten Messelektrode idealerweise, dass $R_{12}/R_f \geq 0{,}8$ und bevorzugt $R_{12}/R_f \geq 0{,}9$ erfüllt wird, wobei $R_f$ der Radius der Frontfläche zum Mittelpunkt ist, wobei die Frontfläche üblicherweise kreisrund ausgebildet ist und wobei $R_{12}$ den Abstand der ersten und zweiten Messelektrode zum Mittelpunkt beschreibt.

Eine Ausgestaltung sieht vor, dass die erste und die zweite Messelektrode auf einer, auf der Stirnfläche verlaufenden Gerade angeordnet sind,

wobei die dritte und die vierte Messelektrode durch die Gerade geschnitten werden,

wobei die dritte und die vierte Messelektrode zwischen der ersten und der zweiten Messelektrode angeordnet sind.

Es hat sich erstaunlicherweise gezeigt, dass für die Erfüllung der bijektiven Relation zwischen den beiden Messwerten es bereits ausreicht, wenn zwischen den herkömmlichen zwei Messelektroden, zwei weitere Messelektroden angeordnet werden, wobei alle vier Messelektroden im Wesentlichen auf einer Geraden liegen.

Durch die Anordnung aller Messelektroden auf einer Gerade kann für beide Messelektrodenpaare eine maximale Signalstärke erreicht werden. Des Weiteren bleibt für diese Ausgestaltung ein bidirektionaler Einsatz der Durchflussmesssonde in der Rohrleitung erhalten.

Eine Ausgestaltung sieht vor, dass die Messelektroden auf Kreisumfängen konzentrischer Kreise liegen,

wobei die erste und die zweite Messelektrode auf einem der Kreisumfänge mit einem Radius $R_{12}$ liegen,

wobei die dritte und die vierte Messelektrode auf einem der Kreisumfänge mit einem Radius $R_{34}$ liegen,

wobei ein Verhältnis der beiden Radien die Ungleichung $0{,}2 \leq R_{34}/R_{12} \leq 0{,}9$, insbesondere $0{,}3 \leq R_{34}/R_{12} \leq 0{,}7$ und bevorzugt $0{,}4 \leq R_{34}/R_{12} \leq 0{,}6$ erfüllt.

Es ist besonders vorteilhaft, wenn bei der Anordnung der Messelektroden die oben angegebene Grenzen für das Verhältnis der beiden Radien eingehalten werden. Wenn die dritte und vierte Messelektroden die Bedingung erfüllen, ist die induzierte Messspannung Reynolds-Zahl-abhängig bzw. weist der Korrekturfaktor $f(Re)$ eine besonders große Reynolds-Zahl-Abhängigkeit auf, so dass bereits geringe Änderungen der Reynolds-Zahl des Mediums detektiert werden können.

Eine Ausgestaltung sieht vor, dass aktuelle Messwerte der ersten Messgröße bei der Testmessung in einem Reynolds-Zahlenbereich von $10\,000 \leq Re \leq 100\,000$ im Wesentlichen proportional zur Durchflussgeschwindigkeit des Mediums sind,

wobei eine Änderung aktueller Messwerte der zweiten Messgröße mit zunehmender Reynolds-Zahl bei der Testmessung in einem Reynolds-Zahlenbereich von $10\,000 \leq Re \leq 100\,000$ nicht konstant ist.

Bei Reynolds-Zahlen kleiner $1\,000$ befindet sich die Strömung in einem Übergangsbereich zwischen turbulenter und laminarer Strömung und $f(Re)$ lässt sich nicht mehr durch eine definierte Funktion beschreiben. $f(Re)$ weist ein HystereseVerhalten auf oder variiert über die Zeit. Bei großen Reynolds-Zahlen ist das Strömungsprofil Reynolds-Zahl-unabhängig und somit $f(Re)$ für beide Messgrößen konstant. In dem Fall kann die Reynolds-Zahl nicht bestimmt werden.

Eine Ausgestaltung sieht vor, dass das fließende Medium in der Testmessung ein newtonsches Fluid, insbesondere Wasser ist,

wobei in der Testmessung das Durchflussmesssonde so in einer Rohrleitung mit einer geraden Einlaufstrecke von mindestens 20 DN und bevorzugt mindestens 50 DN eingebracht ist, dass ein im Wesentlichen symmetrisches Strömungsprofil im Medium vorliegt,

wobei die Rohrleitung einen Durchmesser $DN$ von DN 80 aufweist,

wobei ein Abstand zwischen der Stirnfläche und einer Innenwandung der Rohrleitung die Einbautiefe D beschreibt,

wobei die Einbautiefe $0,05 \leq D/DN \leq 0,4$ und bevorzugt $0,1 \leq DIDN \leq 0,2$ erfüllt.

Die Testmessung beschreibt eine Messumgebung, in der die Bedingung für die Bestimmung der Reynolds-Zahl, nämlich die Bijektivität der Abbildung des Quotienten der beiden Messgrößen auf die Reynolds-Zahl, erfüllt ist.
vor:

- Bilden einer korrigierten Durchflussgeschwindigkeit und/oder eines korrigierten Volumendurchflusses mittels eines von der Reynolds-Zahl abhängigen Korrekturfaktors; und/oder

- Ermitteln des kinematischen Viskositätswertes des Mediums im Rohr mittels Messwerte der ersten oder der zweiten Messgröße und der ermittelten Reynolds-Zahl.

Es ist besonders vorteilhaft, wenn in der Speichereinheit Korrekturfaktoren, insbesondere einer der beiden Korrekturfaktoren $f_1$ und $f_2$ hinterlegt sind, die zur genaueren Bestimmung der Durchflussgeschwindigkeit und/oder des Volumendurchflusses dienen. Die Korrekturfaktoren können in einem Simulationsverfahren bestimmt oder beim Justierverfahren ermittelt bzw. gemessen werden.

Mittels der Korrekturfaktoren können Reynolds-Zahl-bedingte Abweichungen des Durchflussmesswertes reduziert werden, so dass der Reynolds-Zahlenbereich vergrößert wird, in dem die angegebene Messgenauigkeit erfüllt wird.

Eine Ausgestaltung sieht vor, dass eine Funktion, welche Reynolds-Zahlen Quotienten der ersten und der zweiten Messgröße zuordnet, zumindest in einem Reynolds-Zahlenbereich von $10\,000 \leq Re \leq 100\,000$, insbesondere $5\,000 \leq Re \leq 500\,000$ und bevorzugt $1\,000 \leq Re \leq 1\,000\,000$ bijektiv ist.

Die Ausgabe der Messwerte erfolgt beispielsweise über ein, mit der Durchflussmesssonde verbundenes Display. Alternativ kann das Display auch Teil eines Smartphones oder Laptops sein und über eine kabellose Verbindung die anzuzeigenden Messwerte von der Auswerteschaltung erhalten. Alternative und in der Prozessautomatisierung bekannte Ausgabeeinheiten sind Systeme zur Datenübertragung, wie Feldbusse oder Echtzeit-Ethernet.

Die Erfindung wird anhand der nachfolgenden Figuren näher erläutert. Es zeigt:

Fig. 1: eine perspektivische und teilweise geschnittene Darstellung einer magnetisch-induktiven Durchflussmesssonde nach dem Stand der Technik;

Fig. 2: eine Längsschnittsdarstellung einer in einer Rohrleitung installierten magnetisch-induktiven Durchflussmesssonde nach dem Stand der Technik;

Fig. 3: eine Frontansicht einer ersten Ausgestaltung der erfindungsgemäßen magnetisch-induktiven Durchflussmesssonde;

Fig. 4: eine Frontansicht einer zweiten Ausgestaltung der erfindungsgemäßen magnetisch-induktiven Durchflussmesssonde;

Fig. 5: eine Längsschnittdarstellung der ersten Ausgestaltung der erfindungsgemäßen magnetisch-induktiven Durchflussmesssonde mit zusätzlichem Paddel;

Fig. 6: eine Längsschnittdarstellung einer dritten Ausgestaltung der erfindungsgemäßen magnetisch-induktiven Durchflussmesssonde;

Fig. 7: eine Längsschnittdarstellung einer vierten Ausgestaltung der erfindungsgemäßen magnetisch-induktiven Durchflussmesssonde;

Fig. 8: zwei Diagramme, wobei das erste Diagramm die Funktionen $f_1(Re)$ und $f_2(Re)$ in Abhängigkeit der Reynolds-Zahl und das zweite Diagramm den Quotienten g der beiden Funktionen $f_1(Re)$ und $f_2(Re)$ in Abhängigkeit der Reynolds-Zahl abbildet;

Fig. 9: ein Diagramm, welches den Fehler in Abhängigkeit von der Durchflussgeschwindigkeit des Mediums für verschiedene Elektrodenanordnungen darstellt; und

Fig. 10: ein Flussdiagramm einer Ausgestaltung des Verfahrens zum Betreiben einer magnetisch-induktiven Durchflussmesssonde.

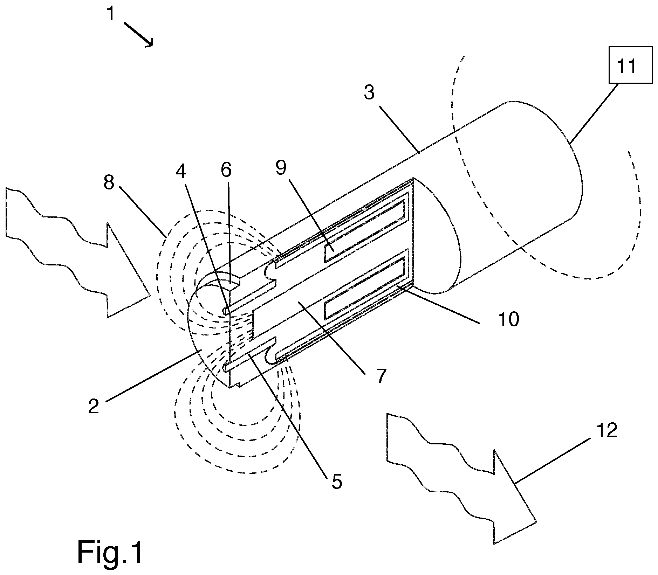

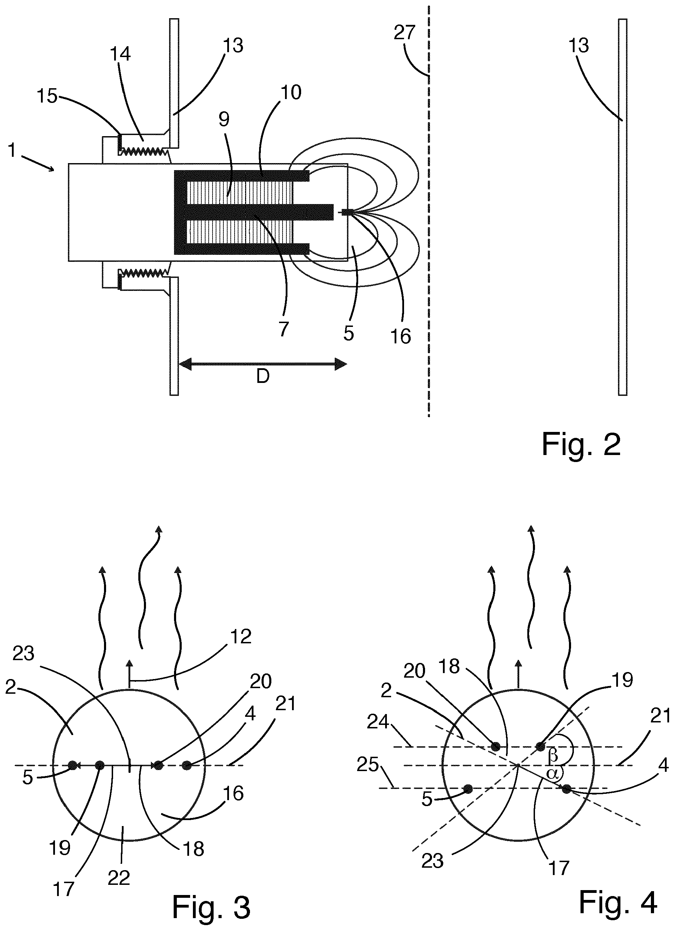

Anhand der perspektivischen und teilweise geschnittenen Darstellung der Fig. 1 wird zunächst das der Erfindung zugrunde liegende Messprinzip erläutert. Eine Durchflussmesssonde 1 umfasst ein im allgemeinen kreiszylindrisches, einen vorgegebenen Außendurchmesser aufweisendes Gehäuse 3. Dieses ist an den Durchmesser einer Bohrung angepasst, die sich in einer Wand einer in Fig. 1 nicht, dagegen in Fig. 2 dargestellten Rohrleitung 13 befindet und in die die Durchflussmesssonde 1 fluiddicht eingesteckt ist. In der Rohrleitung 13 strömt ein zu messendes Medium, in das die Durchflussmesssonde 1 praktisch senkrecht zur Strömungsrichtung des Mediums eintaucht, die durch die gewellten Pfeile 12 angedeutet ist. Ein in das Medium ragendes Frontende 2 des Gehäuses 3 ist mit einem Frontteil 6 aus Isoliermaterial fluiddicht verschlossen. Mittels einer im Gehäuse 2 angeordneten Spulenanordnung 9 lässt sich ein durch das Frontende hindurch, in das Medium hineinreichendes Magnetfeld 8 erzeugen. Ein mindestens teilweise aus einem weichmagnetischen Material bestehender, im Gehäuse 2 angeordneter Spulenkern 7 endet an oder in der Nähe des Frontendes. Eine Rückführung 10, die die Spulenanordnung 9 und den Spulenkern 7 umschließt, ist dazu eingerichtet das aus dem Frontende hindurchreichenden Magnetfeld 8 in das Gehäuse 2 zurückzuführen. Der Spulenkern 7, die Spulenanordnung 9 und eine Rückführung 10 bilden eine magnetfelderzeugende Vorrichtung. Eine erste und eine zweite galvanische Messelektrode 4, 5 sind in dem Frontteil 6 angeordnet und berühren das Medium. An den Messelektroden 4, 5 lässt sich eine aufgrund des Faraday'schen Induktionsgesetzes induzierte elektrische Spannung mittels einer Mess- und/oder Auswerteeinheit 11 abgreifen. Diese ist maximal, wenn die Durchflussmesssonde so in die Rohrleitung 13 eingebaut ist, dass eine durch eine die beiden Messelektroden 4, 5 schneidende Gerade und eine Längsachse der Durchflussmesssonde aufgespannte Ebene senkrecht zu der Strömungsrichtung 12 bzw. Längsachse 27 der Rohrleitung 13 verläuft.

Die Fig. 2 stellt ein in eine Rohrleitung eingebaute Durchflussmesssonde 1 im Längsschnitt dar. Die Durchflussmesssonde 1 ist mittels einer Einschraubverbindung 14, die in die Wand der Rohrleitung 13 eingesetzt und mit ihr z.B. verschweißt ist, in der Rohrleitung 13 fluiddicht befestigt. Dieser Aufbau der Messstelle ist besonders zweckmäßig, da zunächst die Einschraubverbindung 14 in die Rohrleitung 13 eingesetzt und darin eingeschweißt werden kann und erst danach die Durchflussmesssonde 1 in den Einschraubverbindung 14 eingesteckt, ihrerseits darin eingeschraubt und mittels einer Dichtung 15 abgedichtet zu werden braucht. Dadurch entsteht einbaubedingt ein unbekannter Einbauwinkel. Die erste, zweite, dritte und vierte Messelektrode 4, 5, 19, 20 sind auf dem Frontende 2 symmetrisch zu einem Zentrum 6 des Frontendes 2 angeordnet. Alle vier Messelektroden 4, 5, 19, 20 liegen auf einer Gerade. Die Einbautiefe D gibt an, wie tief die Durchflussmesssonde in das Medium eingeführt ist bzw. in das Rohr hineinragt.

Die Fig. 3 bis 7 zeigen unterschiedliche Ausgestaltungen der erfindungsgemäßen magnetisch-induktiven Durchflussmesssonde. Die Ausgestaltungen unterscheiden sich darin, dass die Positionierung der Messelektroden variiert. Um die Übersichtlichkeit der Figuren zur gewährleisten wird auf die Darstellung der magnetfelderzeugende Vorrichtung verzichtet. In der Fig. 1 oder 2 wird jeweils ein Magnetsystem offenbart, das eine Spule, einen Spulenkern und einen Rückführkörper offenbart. Es sind aber auch andere magnetfelderzeugende Vorrichtungen bekannt, die in magnetisch-induktiven Durchflussmesssonden verbaut werden. Die genaue Anordnung der Messelektroden hängt von der Geometrie und Anordnung der magnetfelderzeugenden Vorrichtung ab. Diese muss daher bei der Optimierung der idealen Anordnung der Messelektroden berücksichtigt werden.

Die Fig. 3 zeigt eine schematische Frontansicht eines ersten Ausführungsbeispiels der erfindungsgemäßen Durchflussmesssonde. Ein Pfeil deutet die Strömungsrichtung 12 des fließenden Mediums an. Die ideale Einbauorientierung verlangt, dass eine das Messelektrodenpaar schneidende Bezugsgerade 21 senkrecht zur Strömungsrichtung 12 des Mediums verläuft. Die erste und die zweite Messelektrode 3, 4 sind auf der Bezugsgerade liegend auf der Frontfläche 22 angeordnet und ihre Positionierung ist so an die magnetfelderzeugende Vorrichtung angepasst, dass die an den beiden Messelektroden 3, 4 anliegende, induzierte Messspannung über den angegebenen Reynolds-Zahlenbereich linear ist. Zusätzlich zu der ersten und zweiten Messelektrode 3, 4 ist eine dritte und vierte Messelektrode 19, 20 an der Frontfläche 22 angeordnet. Die dritte und vierte Messelektrode 19, 20 liegen auch auf der Bezugsgerade 21 und sind zwischen der ersten und zweiten Messelektrode 4, 5 angeordnet. Die erste und zweite Messelektrode 4, 5 liegen auf einem Kreisumfang mit Radius $R_{12}$ und die dritte und vierte Messelektrode liegen auf einem Kreisumfang mit Radius $R_{34}$. Gemäß dieser Ausgestaltung ist $R_{34} < R_{12}$.

Die Messschaltung ist dermaßen ausgebildet, dass sie eine erste Potentialdifferenz $U_1$ zwischen der ersten und der zweiten Messelektrode 4, 5 und eine zweite Potentialdifferenz $U_2$ zwischen der dritten und vierten Messelektrode 19, 20 abgreift, mit $U_1 = f_1(Re) \cdot S_1 \cdot u$ und $U_2 = f_2(Re) \cdot S_2 \cdot u$, wobei $f_1(Re)$ und $f_2(Re)$ jeweils einen Reynolds-Zahl-abhängigen Korrekturfaktor beschreiben. Die Positionierung der dritten und vierten Messelektrode 20, 21 ist dahingehend optimiert, dass sich der Quotient der ersten und zweiten Potentialdifferenz $U_1/U_2$ bijektiv zur Reynolds-Zahl des fließenden Mediums im Rohr verhält bzw. dass sich eine von der ersten und zweiten Potentialdifferenz abhängige, mathematische Funktion, die die Reynolds-Zahl auf den Quotienten abbildet bijektiv ist. Die Optimierung der Anordnung kann experimentell oder mittels eines Simulationsverfahrens erfolgen, beispielsweise mittels Finite-Elemente Simulationen.

Für den Quotienten $U_1/U_2$ ergibt sich

$$\frac{U_1}{U_2} = \frac{f_1(Re)}{f_2(Re)} \cdot \frac{S_1}{S_2} = g(Re) \cdot \frac{S_1}{S_2}.$$

Gemäß dem Fall, dass gRe invertierbar ist gilt außerdem

$$Re = g^{-1}\left(U_1 \cdot \frac{S_2}{S_1 \cdot U_2}\right),$$

wobei $g^{-1}$ die Umkehrfunktion von $g$ ist. Die Bijektivität des Quotienten kann am einfachsten dadurch realisiert werden, dass die erste und die zweite Messelektrode so im Gehäuse angebracht werden, dass der erste Korrekturfaktor $f_1(Re)$ über den Reynolds-Zahlenbereich Reynolds-Zahl-unabhängig ist. In diesem Fall muss der zweite Korrekturfaktor $f_2$ bijektiv mit der Reynolds-Zahl korrespondieren.

Die Messschaltung ist dazu eingerichtet eine Potentialdifferenz zwischen der ersten und der zweiten Messelektrode 3, 4 und eine Potentialdifferenz an der dritten und vierten Messelektrode 19, 20 abzugreifen oder an den jeweiligen Messelektrode ein Potential in Bezug auf ein Referenzpotential zu messen. Die Messdaten werden an eine Auswerteeinheit weitergeleitet, die eine Speichereinheit umfasst, in der Referenzwerte und Reynolds-Zahlen hinterlegt sind. Eine Auswerteschaltung ist dazu eingerichtet, aus den gemessenen Messdaten und den hinterlegten Referenzdaten die Reynolds-Zahl des Mediums im Rohr zu bestimmen. Ist die Reynolds-Zahl bekannt, so lässt sich die kinematische Viskosität mit Hinzunahme der Messwerte der ersten oder der zweiten Messgröße oder der bereits bestimmten Durchflussgeschwindigkeit bzw. des Volumendurchflusses berechnen. Die Messschaltung, Auswerteschaltung und die Speichereinheit können anders als in der schematischen Darstellung abgebildet auf einer Elektronikeinheit angeordnet sein.

Gemäß der ersten Ausgestaltung liegen die Messelektroden, an denen eine möglichst Reynolds-Zahlen unabhängige Messspannung abgegriffen wird, auf einem Kreisumfang, welcher einen Bereich einschließt, in dem die beiden Messelektroden angeordnet sind, an denen eine Reynolds-Zahlen abhängige Messspannung abgegriffen wird. Mit einer Anpassung des Magnetsystems kann aber auch die an den innenliegenden Messelektroden anliegende Messspannung linear mit der Durchflussgeschwindigkeit korrelieren und die an den außenliegenden Messelektroden anliegende Messspannung Reynolds-Zahl abhängig sein. Erfindungsgemäß muss nur erfüllt sein, dass der Quotient der beiden induzierten und gemessenen Messspannungen bijektiv über einen festgelegten Reynolds-Zahlenbereich sein muss.

Die Fig. 4 zeigt eine Frontansicht einer zweiten Ausgestaltung der erfindungsgemäßen magnetisch-induktiven Durchflussmesssonde. In dieser Ausgestaltung sind vier Messelektroden 4, 5, 19, 20 an dem Frontende 2 der Durchflussmesssonde angeordnet. Dabei schneidet eine erste Messelektrodenachse 24 das zweite Messelektrodenpaar 19, 20 und eine zweite Messelektrodenachse 25 das erste Messelektrodenpaar 4, 5. Beide Messelektrodenachsen 24, 25 verlaufen im Wesentlichen parallel zueinander. Eine die die Frontfläche in zwei gleich große Flächen einteilende und parallel zur ersten oder zweiten Messelektrodenachse 24, 25 verlaufende Bezugsgerade 21 verläuft durch den Mittelpunkt 23 des Frontendes 2. Eine der zwei das zweite Messelektrodenpaar bildenden Messelektroden 19, 20 und der Mittelpunkt 23 werden durch einen zweiten Radius geschnitten. Eine der zwei das erste Messelektrodenpaar bildenden Messelektroden 4, 5 und der Mittelpunkt 23 der Frontfläche 2 werden durch eine erste Gerade so geschnitten, dass die Bezugsgerade 21 und die erste Gerade einen Winkel $\beta$ aufspannen. Eine erste Gerade, welche den Mittelpunkt 23 und eine der beiden das erste Messelektrodenpaar bildenden Messelektroden 4, 5 schneidet, spannt zusammen mit der Bezugsgeraden 21 einen Winkel $\alpha$ auf. Wählt man die Winkel so, dass $\alpha = \beta = 0°$ gilt, endet man bei der ersten Ausgestaltung. Ausgehend vom Magnetsystem lassen sich die Winkel $\alpha$ und $\beta$ so optimieren, dass an einem Messelektrodenpaar eine Reynolds-Zahl unabhängige Messspannung und am anderen Messelektrodenpaar eine Reynolds-Zahl abhängige Messspannung induziert wird, wobei die jeweilige Abhängigkeit für einen beschränkten Reynolds-Zahlenbereich gilt. Die Bezugsgerade 21 orientiert sich zusätzlich auch senkrecht zur Fließrichtung des Mediums. Die Durchflussmesssonde wird so in das Rohr eingebaut, dass die Fließrichtung des Mediums senkrecht zur Bezugsgeraden 21 verläuft.

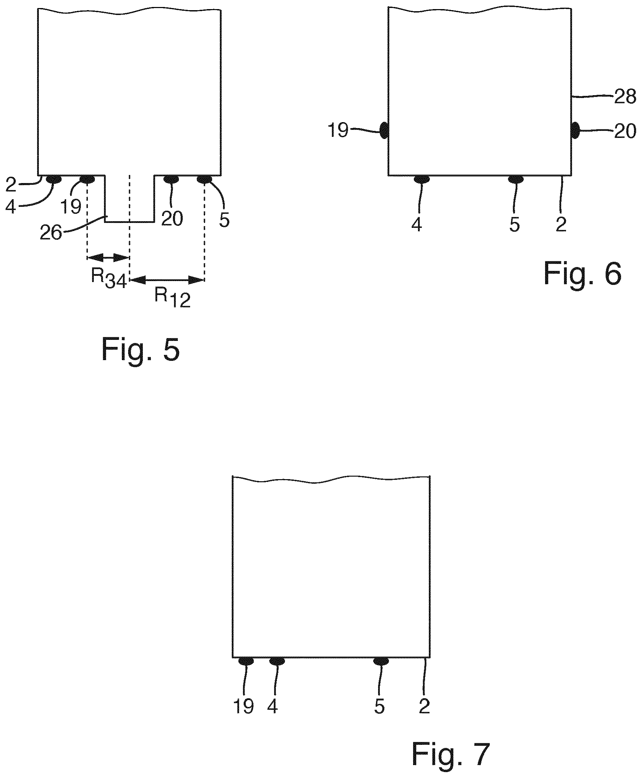

Die Fig. 5 zeigt eine Längsschnittdarstellung einer Modifizierung der ersten Ausgestaltung der erfindungsgemäßen Durchflussmesssonde. Im Unterschied zur Fig. 1 weist das Frontende 2 ein Paddel 26 auf. Somit wird das Frontende 2 nicht durch eine einzelne Frontfläche, sondern durch mehrere Frontflächen, die teilweise senkrecht zueinander stehen oder parallel verlaufen, gebildet. Das heißt auch, dass die Messelektroden an den Seitenflächen oder an der Frontfläche des Paddels 26 angeordnet sein können. Gemäß der ersten Ausgestaltung sind die Messelektroden jedoch nicht am Paddel 26 angebracht. Die Messelektroden 4, 5, 19, 20 befinden sich im Bereich zwischen dem Paddel 26 und dem Randbereich des Frontendes 2. Die erste und zweite Messelektrode 4, 5 weisen jeweils einen Abstand $R_{12}$ zum Mittelpunkt des Frontendes auf. Die Position der beiden Messelektroden 4, 5 ist dahingehend optimiert, dass der Korrekturfaktor zur Ermittlung der Durchflussgeschwindigkeit unabhängig von der Reynolds-Zahl ist. Der Mittelpunkt des Frontendes liegt auf einer Längsebene der Durchflussmesssonde, die auch gleichzeitig eine Spiegelebene ist. Die dritte und vierte Messelektrode 19, 20 liegen auf dem Umfang eines Kreisumfangs mit Radius $R_{34}$ zum Mittelpunkt. Die Position der beiden Messelektroden 19, 20 ist dahingehend optimiert, dass der Korrekturfaktor zur Ermittlung der Durchflussgeschwindigkeit von der Reynolds-Zahl abhängig ist. Für die in der Fig. 5 abgebildete Ausgestaltung gilt, dass $R_{34} < R_{12}$ ist.

Die Fig. 6 zeigt eine Längsschnittdarstellung einer zweiten Ausgestaltung, bei der die dritte und vierte Messelektrode 19, 20 an der Mantelfläche (28) des Gehäuses und die erste und zweite Messelektrode 4, 5 an dem Frontende 2 angeordnet sind. In dieser Ausgestaltung ist die Anordnung, der an der Frontfläche angeordneten Messelektroden 4, 5 dahingehend an die magnetfelderzeugenden Vorrichtung angepasst, dass der Durchflussmesswert über einen möglichst großen Reynolds-Zahlenbereich linear mit der ermittelten Messspannung korreliert. Die Positionierung der an der Ummantelung angeordneten Messelektroden 19, 20 in Korrelation mit dem Magnetsystem ist so gewählt, dass die an den beiden Messelektroden induzierte Messspannung über einen möglichst großen Reynolds-Zahlenbereich Reynolds-Zahl abhängig ist. Die Optimierung dieser beiden Messelektroden 19, 20 erfolgt dermaßen, dass die Steigung des Korrekturfaktors $f(Re)$ bei variierender Reynolds-Zahl möglichst groß wird.

Es sind magnetisch-induktive Durchflussmesssonden im Stand der Technik bekannt, welche Messelektroden aufweisen, die ausschließlich an der Mantelfläche (28) des Gehäuses angebracht sind. Entsprechend ist die magnetfelderzeugende Vorrichtung auch so angepasst, dass die induzierte Messspannung linear mit der Durchflussgeschwindigkeit korreliert. Ausgehend von derartigen Durchflussmesssonden wird die Anordnung der ersten und zweiten Messelektroden (4, 5) in Abhängigkeit zum Magnetsystem so gewählt, dass die induzierte Messspannung über einen möglichst großen Reynolds-Zahlenbereich Reynolds-Zahl abhängig ist, bzw. dass der Gradient des Korrekturfaktors mit zunehmende Reynolds-Zahl möglichst groß ist.

Die Fig. 7 zeigt einen Längsschnitt einer vierten Ausgestaltung. Zusätzlich zur ersten und zweite Messelektroden 4, 5, welche beide am Frontende 2 angeordnet sind, ist auch eine dritte Messelektrode 19 auf der Frontfläche positioniert. Der Abstand der ersten und zweiten Messelektrode 4, 5 definiert den Durchmesser eines Kreises. Dabei liegt die dritte Messelektrode 19 außerhalb der Kreisfläche. Gemäß der vierten Ausgestaltung ist die Messschaltung so eingerichtet, dass eine Messspannung an der ersten und zweiten Messelektrode 4, 5 und ein elektrisches Potential an der dritte Messelektrode 19 in Bezug auf ein Erdpotential oder eine Messspannung zwischen der dritten und der ersten bzw. zweiten Messelektrode 19, 4 bzw. 19, 5 abgegriffen wird.

Für alle Ausgestaltungen gilt, dass die Positionierung der Messelektroden so in Beziehung zur magnetfelderzeugenden Vorrichtung gewählt werden muss, dass eine erste Messgröße, die über einen Reynolds-Zahlenbereich Reynolds-Zahl unabhängig ist, und eine zweite Messgröße ermittelt werden kann, die über den gleichen Reynolds-Zahlenbereich Reynolds-Zahl abhängig ist. Insbesondere muss gelten, dass der Quotient der beiden Messgrößen für unterschiedliche Reynolds-Zahlen eine bijektive, mathematische Funktion beschreibt.

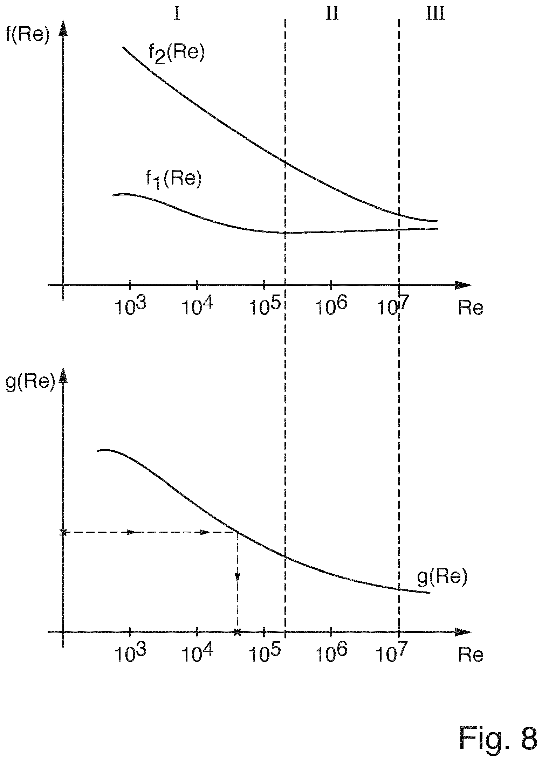

Die Fig. 8 zeigt zwei Diagramme, wobei das erste Diagramm einen Zusammenhang zwischen der einzelnen Korrekturfaktoren $f_1$, $f_2$ und der Reynolds-Zahl des fließenden Mediums im Rohr darstellt und das zweite Diagramm eine Zusammenhang zwischen den Quotienten der Korrekturfaktoren g und der Reynolds-Zahl des fließenden Mediums im Rohr darstellt. Die beiden Diagramme beschränken sich auf einen Reynolds-Zahlenbereich von ca. $10^3$ bis $10^7$. Die Korrekturfaktoren $f_1$ und $f_2$ sind jeweils mit einer der zwei von unterschiedlichen Messelektrodenpaaren abgegriffenen Potentialdifferenzen verknüpft. Der Verlauf der Funktionen $f_1$ und $f_2$ weist drei Bereiche I, II, III auf. Im ersten und dritten Bereich I, III ist der Verlauf der $f_1$ nicht konstant. In diesem Beispiel weist der Verlauf im ersten Bereich I eine negative Steigung und im dritten Bereich III eine positive Steigung auf. Im zweiten Bereich II hingegen ist der Verlauf der $f_1$ konstant. Die Durchflussmesssonde ist für diesen Reynolds-Zahlenbereich linear. Die zweite Funktion $f_2$ ist mindestens im zweiten Bereich bijektiv. Im abgebildeten Beispiel ist der Verlauf der $f_2$ auch im ersten und dritten Bereich bijektiv I, III. Daraus ergibt sich für den Quotienten g, dass er in den Bereichen eins bis drei I, II, III bijektiv ist. Somit lässt sich jedem Quotienten der Messdaten der beiden Messgrößen eindeutig eine Reynolds-Zahl zuordnen. D.h., kann ein Wert von g bestimmt werden, so lässt sich die entsprechende Reynolds-Zahl ableiten. Für die Bereiche, in denen die Durchflussgeschwindigkeit empfindlich gegenüber Reynolds-Zahl-Änderungen ist siehe Bereich I und III können Messabweichungen unter Berücksichtigung der Reynolds-Zahl-abhängigen Korrekturfunktion korrigiert werden.

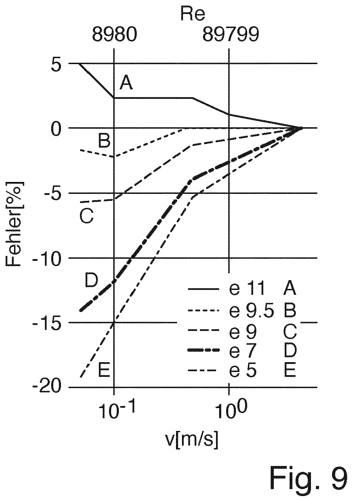

Die Fig. 9 zeigt ein Diagramm, das den Einfluss der Position der Messelektroden am Frontende auf die Reynolds-Zahl-Abhängigkeit der induzierten Messspannung beschreibt. Das Diagramm bildet den Reynolds-Zahl bedingten Messfehler auf die Durchflussgeschwindigkeit ab. Die Reynolds-Zahl hängt von der Durchflussgeschwindigkeit ab. Fünf unterschiedliche Messelektrodenpositionen (5; 7; 9; 9,5 und 11 Millimeter Abstand zum Mittelpunkt) wurden vermessen und die Abweichung vom tatsächlichen Durchflusswert bestimmt (Verläufe A-E). Der Wert nach dem Symbol "e" gibt den Radius eines gedachten Kreisumfanges in Millimeter an, auf dem die Messelektroden liegen. Man erkennt an den Messdaten, dass bei einem Abstand von 9,5 mm die Abweichung des Durchflussmesswertes über den gesamten abgebildeten Reynolds-Zahlenbereich im Wesentlichen Reynolds-Zahl-unabhängig ist, bzw. dass der Fehler immer geringer als 2,5% ist (siehe gepunkteter Verlauf B). Sind die Messelektroden jedoch auf einem Kreisumfang mit einem Radius von 5 mm angeordnet, so kann nicht mehr von einem Reynolds-Zahl-unabhängigen Korrekturfaktor ausgegangen werden. Messabweichungen von bis zu 20% liegen vor (siehe Verlauf E). Mit Hilfe einer Durchflussmesssonde, die ein Messelektrodenpaar aufweist, welches auf einem Kreisumfang mit 9,5 mm und die über ein weiteres Messelektrodenpaar verfügt, welches auf einem Kreisumfang mit einem Radius von 5 mm liegt, lässt sich nun unter Berücksichtigung der jeweils an den Messelektrodenpaaren anliegenden Messspannung die Reynolds-Zahl bestimmen bzw. eine Reynolds-Zahl-abhängige Korrektur von einer der beiden Messspannungen durchführen.

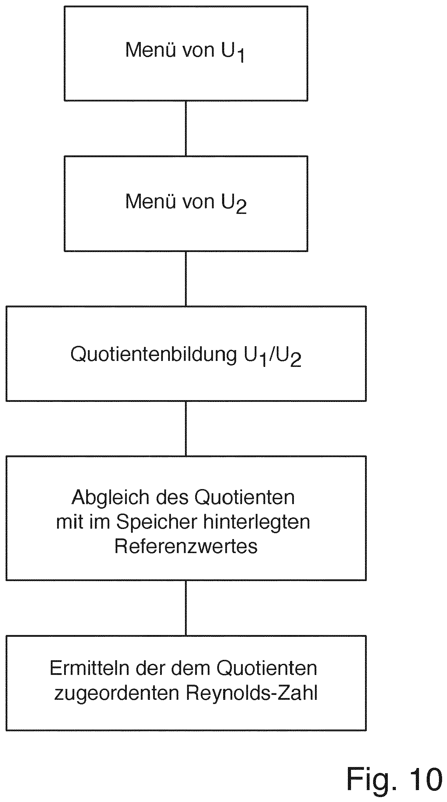

Die Fig. 10 zeigt ein Flussdiagramm einer Ausgestaltung des Verfahrens zum Betreiben einer magnetisch-induktiven Durchflussmesssonde. In einem ersten Schritt wird die erste Potentialdifferenz $U_1$ an dem ersten Messelektrodenpaar gemessen. In einem zweiten Schritt wird die zweite Potentialdifferenz $U_2$ an dem zweiten Messelektrodenpaar gemessen. Alternativ zum Messen der Potentialdifferenz können auch in beiden zuvor genannten Schritten die Potentiale an den jeweiligen Messelektroden in Bezug zum Referenzpotential gemessen werden und die Differenz beispielsweise in der Auswerteschaltung gebildet werden. Die beiden ersten Schritte müssen nicht nacheinander, sondern können auch gleichzeitig erfolgen. Es kann auch die zweite Potentialdifferenz $U_2$ zuerst und dann die erste Potentialdifferenz $U_1$ gemessen werden. Üblicherweise werden jedoch Messspannungen zweier Messphasen, in denen jeweils unterschiedliche, insbesondere entgegengesetzte Gleichspannungen an die Spulen angelegt sind und in denen das Magnetfeld eingeschwungen ist, für die Bestimmung der Durchflussgeschwindigkeit bzw. des Volumendurchflusses berücksichtigt. Dadurch lässt sich ein Offset im Nullpunkt kompensieren. Die Messung der Potentialdifferenz bzw. der Potentiale erfolgt über eine Messschaltung. Die Auswerteschaltung bildet einen Quotienten aus den beiden gemessenen Messwerten, insbesondere Potentialdifferenzen, und vergleicht diesen Quotienten mit einer diesem ermittelten Quotienten zugeordneten Reynolds-Zahl. Diese ist in einem Speicher hinterlegt. Im Speicher kann alternativ auch eine mathematische Gleichung oder eine mathematische Funktion hinterlegt sein, die eine Reynolds-Zahl oder einen Reynolds-Zahlenbereich einem Quotienten zuordnet. Alternativ können im Speicher auch Daten hinterlegt sein, die in einem Justierverfahren ermittelt worden sind. Die Daten können die im Justierverfahren gemessenen Referenzwerte sein, aber auch inter- bzw. extrapolierte Werte bzw. Werte einer beispielsweise geglätteten Kennlinie oder Fit-Funktion der Messdaten. Die Referenzwerte können in einem Justierverfahren experimentell und/oder mittels eines Simulationsprogrammes bestimmt sein.

**Bezugszeichenliste**

1 Durchflussmesssonde
2 Frontende
3 Gehäuse
4 erste Messelektrode
5 zweite Messelektrode
6 Frontteil
7 Spulenkern
8 Magnetfeldlinien
9 Spulenanordnung
10 Rückführung
11 Mess-, Betriebs- und/oder Auswerteeinheit
12 Strömungsrichtung
13 Rohrleitung
14 Einschraubverbindung
15 Dichtung
16 Messelektrode
17 Radius $R_{12}$
18 Radius $R_{34}$
19 dritte Messelektrode
20 vierte Messelektrode
21 Bezugsgerade
22 Frontfläche
23 Mittelpunkt
24 erste Messelektrodenachse
25 zweite Messelektrodenachse
26 Paddel
27 Längsachse
28 Mantelfläche

**Patentansprüche**

1. Magnetisch-induktive Durchflussmesssonde (1), die in ein von einem Medium durchströmtes Rohr einsetzbar ist, umfassend:

   - ein Gehäuse (3),
   wobei das Gehäuse (3) eine Gehäusewandung aufweist;

      - mindestens eine erste und eine zweite Messelektrode (4, 5), die an der Gehäusewandung angeordnet sind, zum Bilden jeweils eines galvanischen Kontaktes mit einem fließenden Medium;
      - mindestens eine magnetfelderzeugende Vorrichtung zum Erzeugen eines die Gehäusewandung durchsetzenden Magnetfeldes,

   wobei die magnetfelderzeugende Vorrichtung im Gehäuse (3) angeordnet ist; und

      - eine Messschaltung, die dazu eingerichtet ist mindestens eine erste Messgröße zu bestimmen,

   wobei Messwerte der ersten Messgröße zwischen zwei Messelektroden oder an einer Messelektrode in Bezug zu einem Referenzpotential gemessen werden,

      - eine Auswerteschaltung, welche dazu eingerichtet ist, eine Reynolds-Zahl und/oder einen kinematischen Viskositätswert des Mediums im Rohr mittels Messwerte der ersten und einer zweiten Messgröße, die sich von der ersten Messgröße unterscheidet, zu ermitteln,

   wobei Messwerte der zweiten Messgröße zwischen zwei Messelektroden oder an einer Messelektrode in Bezug zu einem Referenzpotential ermittelt werden,

wobei sich mindestens eine für die Ermittlung der Messwerte der zweiten Messgröße eingerichtete Messelektrode von den für die Ermittlung der Messwerte der ersten Messgröße eingerichteten Messelektroden unterscheidet, wobei die Messelektroden so an der Gehäusewandung angeordnet sind, dass bei einer Testmessung Quotienten aktueller Messwerte der ersten und der zweiten Messgröße zumindest in einem Reynolds-Zahlenbereich von $10\,000 \leq Re \leq 100\,000$ mit der Reynolds-Zahl des Mediums im Rohr bijektiv korrespondieren.

2. Durchflussmesssonde (1) nach Anspruch 1,

wobei die Messchaltung dazu eingerichtet ist die Messwerte der ersten Messgröße zwischen der ersten und der zweiten Messelektrode (4, 5) zu bestimmen,
wobei die Messschaltung dazu eingerichtet ist Messwerte der zweiten Messgröße zwischen einer ersten und einer dritten Messelektrode (4, 19) oder zwischen einer zweiten und der dritten Messelektrode (5, 19) zu ermitteln.

3. Durchflussmesssonde (1) nach Anspruch 1,

wobei die Messchaltung dazu eingerichtet ist die Messwerte der ersten Messgröße zwischen der ersten und der zweiten Messelektrode (4, 5) zu bestimmen,
wobei die Messschaltung dazu eingerichtet ist Messwerte der zweiten Messgröße zwischen einer dritten und einer vierten Messelektrode (19, 20) zu ermitteln.

4. Durchflussmesssonde (1) nach Anspruch 2 oder 3,

wobei das Gehäuse (3) zumindest abschnittsweise zylindrisch geformt ist und eine Mantelfläche (28) aufweist,
wobei die dritte Messelektrode (19) an der Mantelfläche (28) angeordnet ist und einen galvanischen Kontakt mit dem Medium bildet.

5. Durchflussmesssonde (1) nach Anspruch 2 oder 3, wobei die erste, zweite und eine dritte Messelektrode (4, 5, 19) an einer Stirnfläche des Gehäuses angeordnet sind.

6. Durchflussmesssonde (1) nach Anspruch 5,

wobei die erste und die zweite Messelektrode (4, 5) auf einem auf der Stirnfläche (22) verlaufenden und koaxial zum Gehäuse (3) angeordneten Kreisumfang liegen,
wobei der Kreisumfang einen Bereich umschließt, in dem die dritte Messelektrode (19) angeordnet ist oder bevorzugt die dritte und die vierte Messelektrode (19, 20) angeordnet sind.

7. Durchflussmesssonde (1) nach Anspruch 5 und/oder 6,

wobei die erste und die zweite Messelektrode (4, 5) auf einer, auf der Stirnfläche (22) verlaufenden Gerade angeordnet sind,
wobei die dritte und die vierte Messelektrode (19, 20) durch die Gerade geschnitten werden,
wobei die dritte und die vierte Messelektrode (19, 20) zwischen der ersten und der zweiten Messelektrode (4, 5) angeordnet sind.

8. Durchflussmesssonde (1) nach Anspruch 6 und/oder 7,

wobei die Messelektroden (4, 5, 19, 20) auf Kreisumfängen konzentrischer Kreise liegen,
wobei die erste und die zweite Messelektrode (4, 5) auf einem der Kreisumfänge mit einem Radius $R_{12}$ liegen,
wobei die dritte und die vierte Messelektrode (19, 20) auf einem der Kreisumfänge mit einem Radius $R_{34}$ liegen,
wobei ein Verhältnis der beiden Radien die Ungleichung $0,2 \leq R_{34}/R_{12} \leq 0,9$, insbesondere $0,3 \leq R_{34}/R_{12} \leq 0,7$ und bevorzugt $0,4 \leq R_{34}/R_{12} \leq 0,6$ erfüllt.

9. Durchflussmesssonde (1) nach einem der vorherigen Ansprüche,

wobei aktuelle Messwerte der ersten Messgröße bei der Testmessung in einem Reynolds-Zahlenbereich von $10\,000 \leq Re \leq 100\,000$ im Wesentlichen proportional zur Durchflussgeschwindigkeit des Mediums sind,
wobei eine Änderung aktueller Messwerte der zweiten Messgröße mit zunehmender Reynolds-Zahl bei der Testmessung in einem Reynolds-Zahlenbereich von $10\,000 \leq Re \leq 100\,000$ nicht konstant ist.

10. Durchflussmesssonde (1) nach einem der vorherigen Ansprüche,

wobei in der Testmessung das fließende Medium ein newtonsches Fluid, insbesondere Wasser ist,
wobei in der Testmessung die Durchflussmesssonde (1) so in einer Rohrleitung mit einer geraden Einlaufstrecke von mindestens 20 DN und bevorzugt mindestens 50 DN eingebracht ist, dass ein im Wesentlichen symmetrisches Strömungsprofil im Medium vorliegt,

wobei das Rohr einen Durchmesser *DN* von DN 80 aufweist,

wobei ein Abstand zwischen der Stirnfläche (22) und einer Öffnung des Rohres, in die die Durchflussmesssonde (1) eingesetzt ist, die Einbautiefe D beschreibt,

wobei die Einbautiefe $0{,}05 \le DIDN \le 0{,}4$ und bevorzugt $0{,}1 \le D/DN \le 0{,}2$ erfüllt.

11. Verfahren zum Betreiben einer magnetisch-induktiven Durchflussmesssonde (1), insbesondere der magnetisch-induktiven Durchflussmesssonde (1) nach einem der Ansprüche 1 bis 10,

wobei die Durchflusssonde (1) ein Gehäuse (3) mit einer Gehäusewandung aufweist,

wobei eine magnetfelderzeugende Vorrichtung zum Erzeugen eines die Gehäusewandung durchsetzenden Magnetfeldes im Gehäuse angeordnet ist,

wobei Messelektroden an der Gehäusewandung angeordnet sind;

umfassend die Verfahrensschritte:

- Erfassen eines Messwertes einer ersten Messgröße und eines Messwertes einer zweiten Messgröße, die sich von der ersten Messgröße unterscheidet,

wobei die Messwerte der jeweiligen Messgrößen zwischen zwei Messelektroden oder an einer Messelektrode in Bezug auf ein Referenzpotential bestimmt werden;

- Bilden eines Referenzwertes aus den Messwerten der ersten und der zweiten Messgröße,

wobei der Referenzwert proportional zum Quotienten der Messwerte der ersten und der zweiten Messgröße ist; und

- Ermitteln einer Reynolds-Zahl in Abhängigkeit des Referenzwertes.

12. Verfahren nach Anspruch 11, umfassend den Verfahrensschritt:

- Bilden einer korrigierten Durchflussgeschwindigkeit und/oder eines korrigierten Volumendurchflusses mittels eines von der Reynolds-Zahl abhängigen Korrekturfaktors; und/oder
- Ermitteln des kinematischen Viskositätswertes des Mediums im Rohr mittels Messwerte der ersten oder der zweiten Messgröße und der ermittelten Reynolds-Zahl.

13. Durchflussmessstelle, umfassend:

- eine Rohrleitung (13) mit einem Durchmesser *DN* und einer Öffnung, und
- eine magnetisch-induktive Durchflussmesssonde (1) nach einem der Ansprüche 1 bis 10;

wobei die magnetisch-induktive Durchflussmesssonde (1) in der Öffnung angeordnet ist und eine Einbautiefe *D* aufweist, welche $0{,}05 \le D/DN \le 0{,}4$ erfüllt.

**Claims**

1. Magnetic-inductive flow measuring probe (1) which can be inserted into a pipe through which a medium flows, comprising

- a housing (3),
wherein the housing (3) has a housing wall;

- at least a first and a second measuring electrode (4, 5), which are arranged on the housing wall, for forming a respective galvanic contact with a flowing medium;
- at least one magnetic field generating device for generating a magnetic field passing through the housing wall,

wherein the magnetic field generating device is arranged in the housing (3); and

- a measuring circuit which is set up to determine at least one first measured variable,

wherein measured values of the first measured variable are measured between two measuring electrodes or at a measuring electrode in relation to a reference potential,

- an evaluation circuit which is set up to determine a Reynolds number and/or a kinematic viscosity value of the medium in the pipe by means of measured values of the first and a second measured variable which differs from the first measured variable,

wherein measured values of the second measured variable are determined between two measuring electrodes or at a measuring electrode in relation to a reference potential,
wherein at least one measuring electrode set up for determining the measured values of the second measurand differs from the measuring electrodes set up for determining the measured values of the first measurand,
wherein the measuring electrodes are arranged on the housing wall in such a way that, during a test measurement, quotients of current measured values of the first and the second measured variable correspond bijectively with the Reynolds number of the medium in the pipe at least in a Reynolds number range of $10{,}000 \leq Re \leq 100{,}000$.

2. Flow measuring probe (1) according to claim 1,

wherein the measuring circuit is set up to determine the measured values of the first measured variable between the first and second measuring electrodes (4, 5),

wherein the measuring circuit is set up to determine measured values of the second measured variable between a first and a third measuring electrode (4, 19) or between a second and the third measuring electrode (5, 19).

3. Flow measuring probe (1) according to claim 1,

wherein the measuring circuit is set up to determine the measured values of the first measured variable between the first and second measuring electrodes (4, 5),

wherein the measuring circuit is set up to determine measured values of the second measured variable between a third and a fourth measuring electrode (19, 20).

4. Flow measuring probe (1) according to claim 2 or 3,

wherein the housing (3) is cylindrical in shape, at least in sections, and has a lateral surface (28),

wherein the third measuring electrode (19) is arranged on the lateral surface (28) and forms a galvanic contact with the medium.

5. Flow measuring probe (1) according to claim 2 or 3, wherein the first, second and a third measuring electrode (4, 5, 19) are arranged on an end face of the housing.

6. Flow measuring probe (1) according to claim 5,

wherein the first and the second measuring electrodes (4, 5) are located on a circumference extending on the end face (22) and arranged coaxially to the housing (3),

wherein the circumference encloses an area in which the third measuring electrode (19) is arranged or preferably the third and fourth measuring electrodes (19, 20) are arranged.

7. Flow measuring probe (1) according to claim 5 and/or 6,

wherein the first and second measuring electrodes (4, 5) are arranged on a straight line extending on the end face (22),

wherein the third and fourth measuring electrodes (19, 20) are intersected by the straight line,

wherein the third and fourth measuring electrodes (19, 20) are arranged between the first and second measuring electrodes (4, 5).

8. Flow measuring probe (1) according to claim 6 and/or 7,

wherein the measuring electrodes (4, 5, 19, 20) are located on circumferences of concentric circles,

wherein the first and second measuring electrodes (4, 5) are located on one of the circumferences of the circle with a radius $R\_12$,

wherein the third and fourth measuring electrodes (19, 20) lie on one of the circumferences of the circle with a radius $R\_34$,

wherein a ratio of the two radii fulfils the inequality $0.2 \leq R\_34/R\_12 \leq 0.9$, in particular $0.3 \leq R\_34/R\_12 \leq 0.7$ and preferably $0.4 \leq R\_34/R\_12 \leq 0.6$.

9. Flow measuring probe (1) according to one of the preceding claims,

wherein current measured values of the first measured variable during the test measurement in a Reynolds number range of $10\,000 \leq Re \leq 100\,000$ are essentially proportional to the flow rate of the medium,

wherein a change in current measured values of the second measured variable with increasing Reynolds number is not constant during the test measurement in a Reynolds number range of $10\,000 \leq Re \leq 100\,000$.

10. Flow measuring probe (1) according to one of the preceding claims,

wherein in the test measurement the flowing medium is a Newtonian fluid, in particular water,

wherein in the test measurement the flow measuring probe (1) is inserted in a pipe with a straight inlet section of at least 20 DN and preferably at least 50 DN in such a way that a substantially symmetrical flow profile is present in the medium,

wherein the pipe has a diameter DN of DN 80,

wherein a distance between the end face (22) and an opening in the pipe, into which the flow measurement probe (1) is inserted, describes the installation depth D,

wherein the installation depth fulfils 0.05≤D/DN≤0.4 and preferably 0.1≤D/DN≤0.2.

11. Method for operating a magnetic-inductive flow measuring probe (1), in particular the magnetic-inductive flow measuring probe (1) according to one of claims 1 to 10,

wherein the flow probe (1) has a housing (3) with a housing wall,
wherein a magnetic field generating device for generating a magnetic field passing through the housing wall is arranged in the housing,
wherein measuring electrodes are arranged on the housing wall;
comprising the method steps:

- detecting a measured value of a first measured variable and a measured value of a second measured variable which differs from the first measured variable,

wherein the measured values of the respective measured variables are determined between two measuring electrodes or at a measuring electrode in relation to a reference potential;

- forming a reference value from the measured values of the first and second measured variables,

wherein the reference value is proportional to the quotient of the measured values of the first and the second measured variable; and

- determining a Reynolds number as a function of the reference value.

12. Method according to claim 11, comprising the step of:

- forming a corrected flow velocity and/or a corrected volumetric flow rate by means of a correction factor dependent on the Reynolds number; and/or
- determining the kinematic viscosity value of the medium in the pipe by means of measured values of the first or the second measured variable and the determined Reynolds number.

13. Flow measuring point, comprising

- a pipe (13) with a diameter DN and an opening, and
- an electromagnetic flow measuring probe (1) according to one of claims 1 to 10;

wherein the magnetic-inductive flow measuring probe (1) is arranged in the opening and has an installation depth D which fulfils 0.05≤D/DN≤0.4.

**Revendications**

1. Sonde de mesure de débit magnéto-inductive (1), qui peut être insérée dans un tube traversé par un fluide, comprenant :

- un boîtier (3),
le boîtier (3) présentant une paroi de boîtier ;

- au moins une première et une deuxième électrodes de mesure (4, 5) disposées sur la paroi du boîtier pour former chacune un contact galvanique avec un milieu en écoulement ;
- au moins un dispositif de génération de champ magnétique pour générer un champ magnétique traversant la paroi du boîtier,

le dispositif de génération de champ magnétique étant disposé dans le boîtier (3) ; et

- un circuit de mesure qui est conçu pour déterminer au moins une première grandeur de mesure, les valeurs de mesure de la première grandeur de mesure étant mesurées entre deux électrodes de mesure ou sur une électrode de mesure par rapport à un potentiel de référence,
- un circuit d'évaluation qui est conçu pour déterminer un nombre de Reynolds et/ou une valeur de viscosité cinématique du fluide dans le tube au moyen de valeurs de mesure de la première et d'une deuxième grandeur de mesure qui se distingue de la première grandeur de mesure,

des valeurs de mesure de la deuxième grandeur de mesure étant déterminées entre deux électrodes de mesure ou sur une électrode de mesure par rapport à un potentiel de référence,
au moins une électrode de mesure aménagée pour la détermination des valeurs de mesure de la deuxième grandeur de mesure se distinguant des électrodes de mesure aménagées pour la détermination des valeurs de mesure de la première grandeur de mesure,
les électrodes de mesure étant disposées sur la paroi du boîtier de telle sorte que, lors d'une mesure test, les quotients des valeurs de mesure actuelles de la première et de la deuxième grandeur de mesure correspondent de manière bijective au nombre de Reynolds du fluide dans le tube, au moins dans une plage de nombres de Reynolds de 10 000≤Re≤100 000.

**2.** Sonde de mesure de débit (1) selon la revendication 1,

dans lequel le circuit de mesure est agencé pour déterminer les valeurs de mesure de la première grandeur de mesure entre la première et la deuxième électrode de mesure (4, 5), le circuit de mesure étant conçu pour déterminer des valeurs de mesure de la deuxième grandeur de mesure entre une première et une troisième électrode de mesure (4, 19) ou entre une deuxième et une troisième électrode de mesure (5, 19).

**3.** Sonde de mesure de débit (1) selon la revendication 1,

le circuit de mesure étant conçu pour déterminer les valeurs de mesure de la première grandeur de mesure entre la première et la deuxième électrode de mesure (4, 5), le circuit de mesure étant conçu pour déterminer des valeurs de mesure de la deuxième grandeur de mesure entre une troisième et une quatrième électrode de mesure (19, 20).

**4.** Sonde de mesure de débit (1) selon la revendication 2 ou 3,

le boîtier (3) étant de forme cylindrique au moins par sections et présentant une surface d'enveloppe (28), la troisième électrode de mesure (19) étant disposée sur la surface d'enveloppe (28) et formant un contact galvanique avec le fluide.

**5.** Sonde de mesure de débit (1) selon la revendication 2 ou 3, dans laquelle la première, la deuxième et une troisième électrode de mesure (4, 5, 19) sont disposées sur une face frontale du boîtier.

**6.** Sonde de débit (1) selon la revendication 5,

la première et la deuxième électrode de mesure (4, 5) étant situées sur une circonférence s'étendant sur la face frontale (22) et disposée coaxialement au boîtier (3), la circonférence entourant une zone dans laquelle la troisième électrode de mesure (19) est disposée ou, de préférence, la troisième et la quatrième électrode de mesure (19, 20) sont disposées.

**7.** Sonde de mesure de débit (1) selon la revendication 5 et/ou 6,

la première et la deuxième électrode de mesure (4, 5) étant disposées sur une droite s'étendant sur la surface frontale (22), la troisième et la quatrième électrode de mesure (19, 20) étant coupées par la ligne droite, la troisième et la quatrième électrodes de mesure (19, 20) étant disposées entre la première et la deuxième électrodes de mesure (4, 5).

**8.** Sonde de mesure de débit (1) selon la revendication 6 et/ou 7,

les électrodes de mesure (4, 5, 19, 20) étant situées sur des circonférences de cercles concentriques, la première et la deuxième électrode de mesure (4, 5) étant situées sur l'une des circonférences de cercle ayant un rayon $R\_12$, la troisième et la quatrième électrode de mesure (19, 20) étant situées sur l'une des circonférences circulaires ayant un rayon $R\_34$, un rapport des deux rayons satisfaisant à l'inégalité $0{,}2 \leq R\_34/R\_12 \leq 0{,}9$, en particulier $0{,}3 \leq R\_34/R\_12 \leq 0{,}7$ et de préférence $0{,}4 \leq R\_34/R\_12 \leq 0{,}6$.

**9.** Sonde de mesure de débit (1) selon l'une des revendications précédentes,

dans lequel des valeurs de mesure actuelles de la première grandeur de mesure lors de la mesure de test dans une plage de nombre de Reynolds de $10\,000 \leq Re \leq 100\,000$ sont sensiblement proportionnelles à la vitesse d'écoulement du fluide, une variation des valeurs de mesure actuelles de la deuxième grandeur de mesure avec un nombre de Reynolds croissant n'étant pas constante lors de la mesure d'essai dans une plage de nombres de Reynolds de $10\,000 \leq Re \leq 100\,000$.

**10.** Sonde de mesure de débit (1) selon l'une des revendications précédentes,

dans lequel, lors de la mesure test, le fluide en écoulement est un fluide newtonien, notamment de l'eau, dans lequel, lors de la mesure de test, la sonde de mesure de débit (1) est placée dans une conduite ayant un tronçon d'entrée rectiligne d'au moins 20 DN et de préférence d'au moins 50 DN, de telle sorte qu'il existe un profil d'écoulement sensiblement symétrique dans le fluide, le tuyau présentant un diamètre DN de DN 80, une distance entre la surface frontale (22) et une ouverture du tube, dans laquelle la sonde de mesure de débit (1) est insérée, décrivant la profondeur de montage D, la profondeur d'installation satisfaisant 0,05≤D/DN≤0,4 et de préférence 0,1≤D/DN≤0,2.

11. Procédé d'exploitation d'une sonde de débit magnéto-inductive (1), en particulier de la sonde de débit magnéto-inductive (1) selon l'une des revendications 1 à 10,

la sonde de débit (1) présentant un boîtier (3) avec une paroi de boîtier,
un dispositif de génération de champ magnétique est disposé dans le boîtier pour générer un champ magnétique traversant la paroi du boîtier,
des électrodes de mesure étant disposées sur la paroi du boîtier ;
comprenant les étapes de procédé :

- Détection d'une valeur de mesure d'une première grandeur de mesure et d'une valeur de mesure d'une deuxième grandeur de mesure, qui est différente de la première grandeur de mesure,

les valeurs de mesure des grandeurs de mesure respectives étant déterminées entre deux électrodes de mesure ou sur une électrode de mesure par rapport à un potentiel de référence ;

- la formation d'une valeur de référence à partir des valeurs de mesure de la première et de la deuxième grandeur de mesure,

la valeur de référence étant proportionnelle au quotient des valeurs de mesure de la première et de la deuxième grandeur de mesure ; et

- Déterminer un nombre de Reynolds en fonction de la valeur de référence.

12. Procédé selon la revendication 11, comprenant l'étape de procédé :

- Former une vitesse d'écoulement corrigée et/ou un débit volumique corrigé au moyen d'un facteur de correction dépendant du nombre de Reynolds ; et/ou
- Détermination de la valeur de viscosité cinématique du fluide dans le tube au moyen de valeurs de mesure de la première ou de la deuxième grandeur de mesure et du nombre de Reynolds déterminé.

13. Point de mesure du débit, comprenant :

- une conduite (13) avec un diamètre DN et une ouverture, et
- une sonde de mesure de débit à induction magnétique (1) selon l'une des revendications 1 à 10 ;

La sonde de mesure de débit à induction magnétique (1) étant disposée dans l'ouverture et présentant une profondeur d'installation D satisfaisant 0,05≤D/DN≤0,4.

Fig.1

Fig. 2

Fig. 3

Fig. 4

Fig. 5

Fig. 6

Fig. 7

Fig. 8

Fig. 9

Menü von $U_1$

Menü von $U_2$

Quotientenbildung $U_1/U_2$

Abgleich des Quotienten
mit im Speicher hinterlegten
Referenzwertes

Ermitteln der dem Quotienten
zugeordenten Reynolds-Zahl

Fig. 10

## IN DER BESCHREIBUNG AUFGEFÜHRTE DOKUMENTE

**In der Beschreibung aufgeführte Patentdokumente**

- EP 0892251 A1

**In der Beschreibung aufgeführte Nicht-Patentliteratur**

- Tomographische Methoden bei der induktiven Durchflussmessung zur Bestimmung von Strömungsprofilen und -parametern. **TRÄCHTLER, ANSGAR et al.** Technisches Messen/Plattform für Methoden, Systeme und Anwendungen der Messtechnik. R.Oldenbourg Verlag, 01. Oktober 1997, vol. 64, 365-373